Europäisches Patentamt

**European Patent Office**

Office européen des brevets

(11) Numéro de publication: **0018258**
**A1**

## (12) DEMANDE DE BREVET EUROPEEN

(21) Numéro de dépôt: **80400444.8**

(22) Date de dépôt: **02.04.80**

(51) Int. Cl.³: **F 16 H 49/00**

---

(30) Priorité: **05.04.79 FR 7908631**

(43) Date de publication de la demande: **29.10.80**
**Bulletin 80/22**

(84) Etats contractants désignés: **BE DE GB**

(71) Demandeur: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Debrus, Jean, 123 Tour A. Les Escanaux, F-30200 Bagnols sur Ceze (FR)**

(74) Mandataire: **Mongredien, André et al, c/o Brevatome 25, rue de Ponthieu, F-75008 Paris (FR)**

---

(54) **Dispositif multiplicateur d'effort à billes.**

(57) L'invention concerne un dispositif multiplicateur d'efforts comprenant un corps (10) dans lequel un piston (18) est susceptible de coulisser en réponse à la mise en œuvre de moyens d'actionnement (30).

La transmission au piston (18) de l'effort exercé par les moyens d'actionnement (30) s'effectue par l'intermédiaire de billes (28) en matériau rigide remplissant une chambre de commande (26) définie entre le corps et le piston.

Application aux dispositifs multiplicateurs d'efforts peu accessibles ou inaccessibles, et notamment aux dispositifs disposés dans une enceinte étanche telle qu'une boîte à gants dans laquelle sont manipulés des produits toxiques ou radio-actifs.

0018258

L'invention concerne un dispositif multiplicateur d'efforts et notamment un dispositif multiplicateur d'efforts du type comprenant un corps dans lequel un piston est monté coulissant, une chambre de commande définie entre le corps et le piston et remplie d'un matériau de transmission de force et des moyens d'actionnement agissant sur le matériau de transmission de force pour solliciter le piston en coulissement dans le corps.

On connaît de nombreux dispositifs multiplicateurs d'efforts de ce type qui sont utilisés dans l'industrie à chaque fois qu'un effort doit être transmis et amplifié sans qu'on puisse avoir recours à un système de transmission purement mécanique. Les dispositifs multiplicateurs d'efforts connus sont, soit pneumatiques, soit hydrauliques, c'est-à-dire que le matériau de transmission de force disposé dans la chambre de commande du dispositif afin de transmettre au piston l'effort appliqué par les moyens d'actionnement lors de la mise en oeuvre de ces derniers est un gaz ou un liquide.

Dans certaines applications particulières, et notamment lorsque le dispositif multiplicateur d'efforts doit être disposé à demeure ou pour une longue durée dans un espace d'accès difficile ou dans une enceinte non démontable, il n'est cependant pas possible d'utiliser les dispositifs à fluide classiques en raison des risques de fuites inhérents à ces dispositifs. Lorsqu'un effort suffisamment important pour exiger normalement l'usage d'un dispositif multiplicateur d'efforts doit être appliqué dans ces conditions, il est donc nécessaire de pouvoir disposer d'un dispositif ne présentant pas les risques de fuite inhérents aux dispositifs à fluide existants.

L'invention a pour objet un dispositif multiplicateur d'efforts permettant la transmission et l'amplification d'efforts importants, dans lequel les risques de fuite inhérents aux dispositifs à fluide connus sont supprimés, et qui sont en même temps de conception simple et d'un encombrement relativement réduit.

B. 6555-3 GP

Dans ce but, selon l'invention, un dispositif multiplicateur d'efforts comprenant un corps dans lequel un piston est monté coulissant, une chambre de commande définie entre le corps et le piston et remplie d'un matériau de transmission de force et des moyens d'actionnement agissant sur le matériau de transmission de force pour solliciter le piston en coulissement dans le corps est caractérisé en ce que le matériau de transmission de force est constitué par un ensemble de billes en matériau incompressible remplissant la chambre de commande.

Selon une caractéristique secondaire de l'invention, les billes sont métalliques.

Selon une autre caractéristique secondaire de l'invention, les moyens d'actionnement comprennent un poussoir immobilisé en rotation et susceptible de coulisser dans le corps du boîtier pour déplacer les billes à l'intérieur de la chambre de commande. De préférence, le poussoir et le piston sont alors susceptibles de coulisser dans le corps du boîtier selon des axes sensiblement perpendiculaires entre eux. La chambre de commande peut alors comprendre au moins une partie annulaire, l'axe de coulissement du poussoir étant sensiblement tangentiel au cercle moyen défini par cette partie annulaire. En particulier, la chambre de commande peut présenter au repos sensiblement la forme d'un tore, le poussoir étant sensiblement cylindrique et de section égale ou inférieure à celle du tore.

Selon encore une autre caractéristique de l'invention, les moyens de commande comprennent de plus un organe de manoeuvre coopérant avec le poussoir par l'intermédiaire d'une liaison du type vis-écrou, le poussoir étant immobilisé en rotation et l'organe de manoeuvre étant immobilisé en translation et susceptible d'être sollicité en rotation de l'extérieur du boîtier pour faire coulisser le poussoir dans le corps du boîtier.

Selon encore une autre caractéristique secondaire de l'invention, des moyens élastiques sont prévus pour

B. 6555-3 GP

solliciter le piston vers sa position de repos.

Dans une application particulière de l'invention permettant de réaliser la jonction de deux tuyauteries, le corps comprend deux bras en vis-à-vis dont l'un est susceptible d'être ancré à une contre-bride associée à une tuyauterie, le piston étant monté coulissant dans l'autre bras pour solliciter une bride associée à une autre tuyauterie en contact étanche avec la contre-bride. Dans ce cas, et lorsque des moyens élastiques sont prévus pour solliciter le piston vers sa position de repos, ces moyens élastiques peuvent être disposés entre la bride et l'autre bras de l'étrier.

On décrira maintenant à titre d'exemple non limitatif, deux modes de réalisation particuliers de l'invention, en se référant aux dessins annexés sur lesquels :

- la figure 1 représente, en coupe partielle, un dispositif multiplicateur d'efforts réalisé conformément à la présente invention et plus précisément un vérin particulièrement adapté pour soulever des pièces mécaniques dans un espace réduit et d'accès difficile ;

- la figure 2 est une vue de dessus, en coupe partielle, du vérin représenté sur la figure 1, et

- la figure 3 est une vue en coupe partielle, d'un autre dispositif multiplicateur d'efforts selon l'invention, particulièrement adapté pour serrer l'une contre l'autre deux brides réalisant la jonction de deux tuyauteries, notamment lorsque les difficultés d'accès interdisent l'utilisation des dispositifs habituels de raccordement.

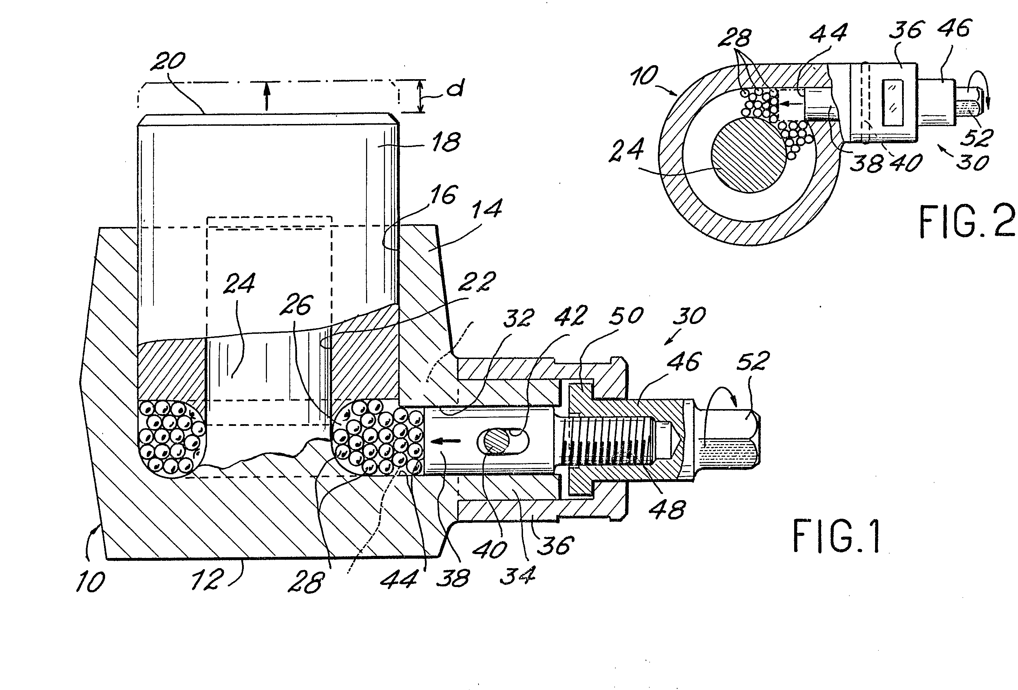

Le vérin représenté sur les figures 1 et 2 est particulièrement adapté pour soulever des pièces mécaniques dans un espace réduit et d'accès difficile tel qu'une boîte à gants à l'intérieur de laquelle sont manipulés des produits toxiques ou radioactifs. A cet effet, le vérin représenté sur la figure 1 comprend un corps 10 définissant une surface plane 12 prévue pour être posée sur un plan de travail horizontal et au-dessus de laquelle le corps 10 définit un cylindre 14 dont l'axe est sensiblement perpendiculaire

B. 6555-3 GP

à la surface 12. Le cylindre 14 comprend un alésage borgne 16 dans lequel est reçu en coulissement un piston 18 définissant une surface active 20 opposée à la surface 12 et sensiblement parallèle à celle-ci. Le piston 18 comprend également un alésage borgne 22, débouchant à l'extrémité du piston opposée à la surface 20, dans lequel est reçue une colonne de guidage 24 faisant partie intégrante du corps 10 du vérin.

Comme le montrent les figures 1 et 2, le piston 18 et le corps 10 définissent entre eux une chambre annulaire 26 présentant au repos sensiblement la forme d'un tore de révolution. Conformément à l'invention, la chambre 16 est remplie de billes 28 de petit diamètre réalisées en un matériau incompressible. Par exemple les billes 28 peuvent être métalliques et notamment en acier et présenter un diamètre d'environ 2mm. Les billes 28 assurent la transmission au piston 18 d'un effort appliqué par des moyens d'actionnement désignés de façon générale par la référence 30.

Dans le mode de réalisation représenté sur les figures 1 et 2, les moyens d'actionnement 30 sont logés dans un alésage 32 formé dans un appendice 34 du corps 10 du vérin, l'alésage 32 étant fermé par un couvercle rapporté 36. Le couvercle 36 et l'appendice 34 sont conçus pour traverser de façon étanche une paroi de la boîte à gants (non représentée), afin de permettre la commande du vérin de l'extérieur de cette boîte.

Les moyens d'actionnement 30 comprennent un poussoir cylindrique 38 susceptible de coulisser dans l'alésage 32, selon un axe sensiblement perpendiculaire à l'axe de coulissement du piston 18. De plus, le poussoir 38 est immobilisé en rotation par rapport au corps 10 au moyen d'une goupille 40 reçue dans une boutonnière 42 formée dans le poussoir 38. Le poussoir 38 agit directement par une face terminale 44 sur les billes 28. Les moyens d'actionnement 30 comprennent de plus un organe de manoeuvre 46 qui coopère avec l'autre extrémité du poussoir 38 par l'intermédiaire d'une liaison du type vis-écrou 48. De plus, l'organe de manoeuvre 46 est immobilisé en translation au moyen d'une collerette 50 disposée entre le couvercle 36 et l'extrémité de l'appendice 34, et il comprend une tête 52 faisant saillie à l'extérieur du couvercle 36 de façon à pouvoir être sollicitée en rotation par un outil de manoeuvre approprié.

De préférence, comme le montre plus particulièrement la figure 2, l'axe des moyens d'actionnement 30 est sensiblement tangentiel au cercle moyen du tore défini par la chambre 26 lorsque le vérin est au repos et le diamètre du poussoir 38 reçu dans l'alésage 32 est sensiblement égal ou légèrement inférieur à celui du tore, ce qui permet d'augmenter sensiblement la course du poussoir 38 à l'intérieur de la chambre 26.

Le vérin qui vient d'être décrit en se référant aux figures 1 et 2 fonctionne de la façon suivante :

Au repos, les différents organes constituant le vérin occupent les positions représentées sur les figures 1 et 2. Lorsque le vérin est destiné à être utilisé à l'intérieur d'une enceinte fermée telle que, par exemple, une boîte à gants permettant de manipuler des substances nocives ou radioactives, la surface 12 est posée sur un plan de travail et le couvercle 36 et l'appendice 34 traversent une paroi de cette enceinte de telle sorte que seule la tête 52 de l'organe de manoeuvre 46 est accessible de l'extérieur de l'enceinte. La pièce à soulever est alors appuyée sur la surface active 20 du piston 18.

Afin de commander la mise en oeuvre du vérin, un outil approprié tel qu'une clé de manoeuvre est engagé sur la tête 52 de l'organe de manoeuvre 46 de façon à solliciter ce dernier en rotation dans le sens correspondant au déplacement du poussoir 38 vers la gauche en considérant les figures 1 et 2 par l'intermédiaire de la liaison du type vis-écrou 48. Le déplacement du poussoir 38 à l'intérieur de l'alésage 32 a pour effet de chasser les billes 28 par la face terminale 44 du poussoir 38. En raison de leur structure incompressible et par le fait que la chambre 26 est entièrement remplie de billes, ces dernières transmet-

B. 6555-3 GP

tent au piston 18 l'effort exercé par le poussoir 38, de telle sorte que le volume de la chambre 26 reste constant. Le piston 18, guidé à la fois par la colonne de guidage 24 et par l'alésage 16 se déplace donc vers le haut en considérant la figure 1 sur la distance d souhaitée.

En raison de la structure particulière du vérin qui vient d'être décrit, le rapport de démultiplication est défini à la fois par le pas des filets de la liaison du type vis-écrou 48 et par le rapport des surfaces entre la face terminale 44 du poussoir 38 et la face inférieure annulaire du piston 18 sur laquelle agissent les billes 28. Cette double démultiplication qui peut être adaptée en fonction des efforts à transmettre peut également être modifiée, notamment en ce qui concerne la liaison du type vis-écrou 48 qui peut être remplacée par tout autre dispositif de démultiplication connu ou à laquelle on peut adjoindre un troisoième étage de démultiplication d'un quelconque type connu.

Le dispositif multiplicateur d'efforts selon l'invention, qui est d'une conception particulièrement simple et d'un encombrement réduit, présente en outre l'avantage essentiel d'éliminer totalement les risques de fuites inhérents aux dispositifs pneumatiques ou hydrauliques utilisés habituellement par suite de l'utilisation des billes 28 à la place des fluides de transmission de force habituellement utilisés.

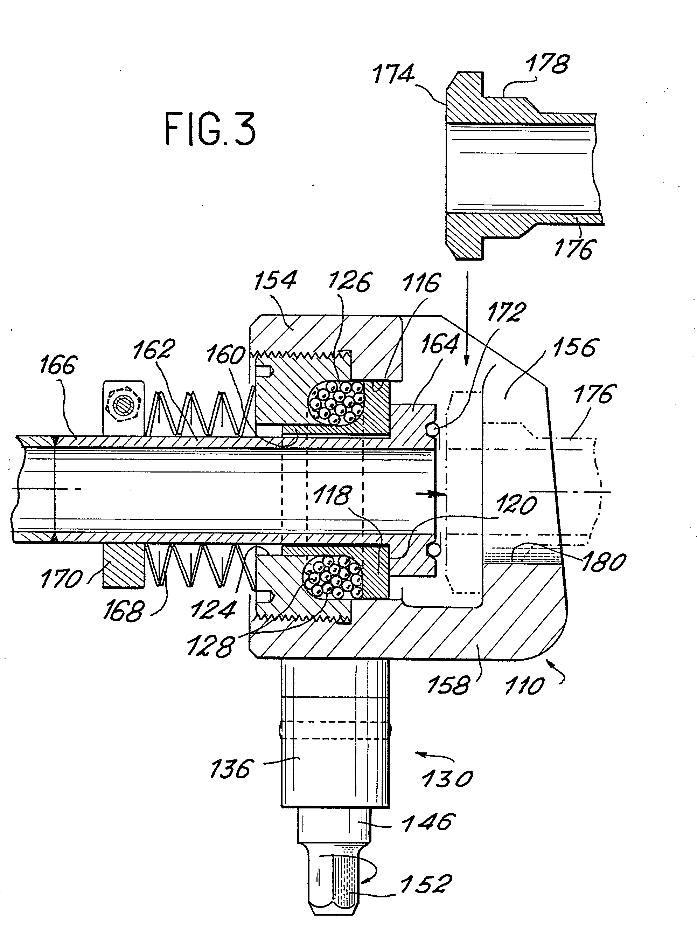

Sur la figure 3, on a représenté un autre dispositif multiplicateur d'efforts selon l'invention, particulièrement adapté pour serrer l'une contre l'autre deux brides réalisant la jonction de deux tuyauteries lorsque les difficultés d'accès interdisent l'utilisation des systèmes habituels de raccordement.

Pour faciliter la compréhension du texte, on a désigné par les mêmes numéros de référence augmentés de 100 les organes ou éléments remplissant les mêmes fonctions que ceux qui ont été décrits en se référant aux figures 1 et 2.

En raison de l'application particulière à laquelle il est destiné, le corps 110 du dispositif de bridage représenté sur la figure 3 comprend deux bras sensiblement parallèles 154 et 156 reliés par une partie de raccordement 158. Le bras 154 du corps 110, réalisé en deux parties dans le mode de réalisation représenté sur la figure 3, est traversé de part en part par un alésage d'axe sensiblement perpendiculaire aux bras 154 et 156 et définissant une partie de petit diamètre 124 et une partie de grand diamètre 116, cette dernière étant disposée du côté du bras 156. Un piston annulaire 118 est monté coulissant dans la partie de grand diamètre 116 de l'alésage et guidé à l'intérieur de la partie de petit diamètre 124. Comme dans le mode de réalisation précédent, une chambre de commande 126 est définie entre le piston 118 et le bras 154 du corps 110.

Conformément à l'invention, la chambre 126 est remplie de billes réalisées en un matériau incompressible, par exemple métallique, tel que de l'acier. Comme dans le mode de réalisation représenté sur les figures 1 et 2, la chambre 126 est de forme annulaire et présente au repos sensiblement la forme d'un tore de révolution dont l'axe est confondu avec celui des parties 124 et 116 de l'alésage formé dans le bras 154 du corps 110.

Comme dans le mode de réalisation précédent, le corps 110 du dispositif multiplicateur d'efforts comprend un appendice (non représenté) fermé par un couvercle 136, dans lequel sont logés des moyens d'actionnement désignés par la référence générale 130. Ces moyens d'actionnement ne seront pas décrits en détail, car ils sont du même type que ceux représentés sur la figure 1, et peuvent faire l'objet de toutes les variantes mentionnées à propos de ces derniers afin d'adapter le rapport de démultiplication du dispositif multiplicateur d'efforts à l'utilisation particulière envisagée. Les moyens d'actionnement 130 comprennent notamment un organe de manoeuvre 146 qui fait saillie hors du couvercle 136 et comporte une tête 152 susceptible de

B. 6555-3 GP

recevoir un outil de manoeuvre approprié. Les moyens d'actionnement 130 comprennent également un poussoir cylindrique (non représenté) qui coopère avec les billes 128 de façon à transmettre,par l'intermédiaire de celles-ci, une force de commande au piston 118. La section du poussoir est de préférence sensiblement identique ou légèrement inférieure à celle du tore formé par la chambre 126 lorsque le dispositif est au repos, et le poussoir agit sur les billes 128 selon une direction sensiblement tangentielle au cercle moyen défini par ce tore, de telle sorte que la course utile du poussoir est aussi grande que possible.

Pour l'application envisagée sur la figure 3, le piston 118 est percé d'un alésage 160 que traverse une bride 162 munie à l'une de ses extrémités d'une collerette 164 prenant appui sur une surface active 120 définie à l'extrémité du piston 118 en vis-à-vis du bras 156 du corps 110. La bride 162 traverse de part en part le bras 154 du corps du vérin et se prolonge à l'extérieur de ce dernier par un embout 166 préalablement raccordé, par exemple par soudure, à l'une des tuyauteries. En raison du caractère irréversible du dispositif, un ressort de rappel 168 est disposé entre le bras 154 du boîtier 110 et un collier 170 associé à l'embout 166 de la bride 162 de façon à permettre le relâchement du serrage. Enfin, l'extrémité de la collerette 164 disposée en vis-à-vis du bras 156 du corps du dispositif de bridage comprend une gorge annulaire dans laquelle est reçu un joint d'étanchéité 172 constitué, par exemple par un joint métallique torique.

Le bras 156 du corps 110 du vérin présente la forme d'un étrier susceptible de prendre appui sur une collerette 174 formée sur une contre-bride 176 préalablement raccordée à l'autre tuyauterie et dont le profil extérieur 178 est complémentaire du profil intérieur d'un dégagement 180 formé dans le bras 156.

La mise en oeuvre du dispositif de bridage représenté sur la figure 3 s'effectue de la façon suivante :

Au repos, les différents organes du dispositif multiplicateur d'efforts occupent les positions représentées sur la figure 3. Lorsqu'on désire effectuer la jonction de deux tuyauteries en serrant l'une contre l'autre la bride 162 et la contre-bride 176 à l'aide du dispositif de bridage représenté sur la figure 3, celui-ci est tout d'abord accroché et centré par son bras 156 sur la contre-bride 176 comme représenté schématiquement en traits mixtes sur la figure 3. La mise en oeuvre du dispositif permettant de réaliser le serrage de la bride 162 sur la contre-bride 176 est alors effectuée de façon identique à la mise en oeuvre du vérin décrit en se référant à la figure 1, à l'aide d'un outil de manoeuvre approprié (non représenté) adapté à la forme particulière de la tête 152 de l'organe de manoeuvre 146. L'organe de manoeuvre 146, sollicité en rotation par cet outil, transmet au poussoir des moyens d'actionnement 130, un mouvement de translation chassant les billes 128 dans la chambre 126. En raison du caractère incompressible des billes 128, il en résulte un déplacement vers la droite, en considérant la figure 3,du piston 118. La surface active 120 du piston 118, qui coopère avec la collerette 164 de la bride 162, sollicite ainsi cette dernière contre la collerette 174 de la contre-bride 176 jusqu'à ce que le joint d'étanchéité 172 soit suffisamment écrasé pour assurer l'étanchéité du raccordement des deux tuyauteries raccordées respectivement à la bride 162 et à la contre-bride 176.

Le desserrage du dispositif de bridage représenté sur la figure 3 s'effectue en sollicitant l'organe de manoeuvre 146 en rotation dans le sens correspondant au relâchement du vérin à l'aide d'un outil de manoeuvre approprié. Le caractère irréversible du dispositif résultant de l'utilisation de billes d'acier 128 à la place du fluide habituellement utilisé est compensé par l'utilisation du ressort de rappel 168 qui maintient constant le volume de la chambre 128 en sollicitant le piston 118 vers la gauche en considérant la figure 3 par l'intermédiaire de la bride 162.

Le dispositif de bridage représenté sur la figure 3 est particulièrement adapté pour réaliser la jonction de

0018258

tuyauteries assurant l'alimentation en fluide d'appareils amovibles disposés à l'intérieur d'une enceinte étanche telle que, par exemple, une boîte à gants à l'intérieur de laquelle sont effectuées des expérimentations sur des produits toxiques ou radioactifs. Comme dans le premier mode de réalisation, le couvercle 136 traverse alors la paroi de l'enceinte (non représentée) de telle sorte que la tête 152 de l'organe de manoeuvre 146 soit accessible de l'extérieur de l'enceinte.

Comme le vérin de levage représenté sur les figures 1 et 2, le dispositif de bridage représenté sur la figure 3 est de conception particulièrement simple et d'encombrement réduit et les risques de fuite inhérents aux dispositifs à fluide usuels sont totalement éliminés par suite de l'utilisation de billes rigides 129 à la place du liquide ou du gaz assurant habituellement la transmission de l'effort de commande au piston.

REVENDICATIONS

1. Dispositif multiplicateur d'efforts comprenant un corps dans lequel un piston est monté coulissant, une chambre de commande définie entre le corps et le piston et remplie d'un matériau de transmission de force et des moyens d'actionnement agissant sur le matériau de transmission de force pour solliciter le piston en coulissement dans le corps, caractérisé en ce que le matériau de transmission de force est constitué par un ensemble de billes en matériau incompressible remplissant la chambre de commande.

2. Dispositif selon la revendication 1, caractérisé en ce que les billes sont métalliques.

3. Dispositif selon l'une quelconque des revendications 1 ou 2, caractérisé en ce que les moyens d'actionnement comprennent un poussoir susceptible de coulisser dans le corps du boîtier pour déplacer les billes à l'intérieur de la chambre de commande.

4. Dispositif selon la revendication 3, caractérisé en ce que le poussoir et le piston sont susceptibles de coulisser dans le corps du boîtier selon des axes sensiblement perpendiculaires entre eux.

5. Dispositif selon la revendication 4, caractérisé en ce que la chambre de commande comprend au moins une partie annulaire et en ce que l'axe de coulissement du poussoir est sensiblement tangentiel au cercle moyen défini par ladite partie annulaire.

6. Dispositif selon la revendication 5, caractérisé en ce que la chambre de commande présente au repos sensiblement la forme d'un tore et en ce que le poussoir est sensiblement cylindrique et de section égale ou inférieure à celle du tore.

7. Dispositif selon l'une quelconque des revendications 3 à 6, caractérisé en ce que les moyens de commande comprennent de plus un organe de manoeuvre coopérant avec le poussoir par l'intermédiaire d'une liaison du type vis-

0018258

écrou, le poussoir étant immobilisé en rotation et l'organe de manoeuvre étant immobilisé en translation et susceptible d'être sollicité en rotation de l'extérieur du boîtier pour faire coulisser le poussoir dans le corps du boîtier.

8. Dispositif selon l'une quelconque des revendications précédentes, caractérisé en ce que des moyens élastiques sont prévus pour solliciter le piston vers sa position de repos.

9. Dispositif selon l'une quelconque des revendications précédentes, particulièrement adapté pour réaliser la jonction de deux tuyauteries, caractérisé en ce que le corps comprend deux bras en vis-à-vis dont l'un est susceptible d'être ancré à une contre-bride associée à une tuyauterie, le piston étant monté coulissant dans l'autre bras pour solliciter une bride associée à une autre tuyauterie en contact étanche avec la contre-bride.

10. Dispositif selon la revendication 9, pris en combinaison avec la revendication 8, caractérisé en ce que les moyens élastiques sont disposés entre la bride et l'autre bras de l'étrier.

FIG.2

FIG.1

1/2

0018258

2 | 2

FIG.3

**Office européen des brevets**

**RAPPORT DE RECHERCHE EUROPEENNE**

00.18258 Numéro de la demande

EP 80 40 (

## DOCUMENTS CONSIDERES COMME PERTINENTS

| Catégorie | Citation du document avec indication, en cas de besoin, des parties pertinentes | Revendication concernée |
|---|---|---|
| X | FR - A - 1 259 006 (PARET)<br><br>* Page 1, colonne de gauche, lignes 25 à 29; figure 2 *<br>-- | 1,2,3, 7 |
| | US - A - 1 346 625 (WOODWARD)<br><br>* Page 1, ligne 13; figure 1 *<br>-- | 1,2,4 |
| A | FR - A - 1 561 464 (O.N.E.R.A.)<br><br>---- | 1,4 |

**CLASSEMENT DE LA DEMANDE (Int. Cl. ³)**

F 16 H 49/00

**DOMAINES TECHNIQUES RECHERCHES (Int. Cl. ³)**

F 16 H

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 13.08.1980 | BEERNAERT |

OEB Form 1503.1   06.78